# EUROPEAN PATENT APPLICATION

(11) **EP 4 821 745 A1**
(43) Date of publication of application: **14.10.2026**
(21) Application number: 26171796.1
(22) Date of filing: 10.04.2026
(51) Int. Cl.: B60L 53/16, B60L 53/18, B60L 53/30, B60L 53/31, B60L 53/66, B60L 53/67, G06F 13/42, H02J 7/40, H04B 15/02, H04L 25/08, H02J 105/37

(54) **CHARGING DEVICE AND CHARGING SYSTEM**

(30) Priority: 10.04.2025 CN 202510452398
(71) Applicant: BYD Company Limited, Shenzhen, Guangdong 518118 (CN)
(72) Inventor: CHEN, Qisen, Shenzhen, 518118 (CN); ZHANG, Xiang, Shenzhen, 518118 (CN); WANG, Xinghui, Shenzhen, 518118 (CN); WANG, Chao, Shenzhen, 518118 (CN); HUANG, Bendong, Shenzhen, 518118 (CN)
(74) Representative: Mathys & Squire

(57) **Abstract**

This application discloses a charging device and a charging system. The charging device includes a communication controller. The communication controller is configured to be connected to communications controllers of at least two vehicles, and the charging device is configured to charge the vehicle in a case that communications is established between the communication controller and the communications controller. In the charging device and the charging system of the implementations of this application, the communication controller can be connected to at least two communications controllers, and the charging device can charge the vehicle in a case that communications is established between the communication controller and the communications controller. Therefore, compared with a case that the communication controller is communicatively connected one-to-one to the communications controller, this application requires only one communication controller to implement communications connection with the at least two communications controllers. A quantity of communication controllers is relatively small, which can not only reduce a production cost of the charging device, but also reduce a volume of the charging device, thereby helping to implement miniaturization of the charging device.

## Description

### TECHNICAL FIELD

This application relates to the field of charging technologies, and in particular, to a charging device and a charging system.

### BACKGROUND

With the rapid development of the electric vehicle industry, direct current charging technology, as one of the core methods of efficient energy replenishment, has received increasing attention in the field. In related technologies, a communication controller (Supply Equipment Communication Controller, SECC) is generally deployed in a charging device, and the communication controller can establish a one-to-one communication connection with a communications controller (Electric Vehicle Communication Controller, EVCC) in a vehicle, so that the charging device can charge the vehicle. However, such an arrangement leads to a relatively large quantity of communication controllers in a scenario of a multi-gun charging pile or charging stack, resulting in a relatively high production cost of the charging device.

### SUMMARY

Implementations of this application provide a charging device and a charging system, so as to resolve the foregoing at least one technical problem.

The charging device according to the implementations of this application includes a communication controller. The communication controller is configured to be connected to communications controllers of at least two vehicles, and the charging device is configured to charge the vehicle in a case that communications is established between the communication controller and the communications controller.

In some implementations, the communication controller includes at least two communications chips and a main control chip. The at least two communications chips are connected one-to-one to the at least two communications controllers; and the main control chip is connected to the at least two communications chips, and the main control chip is configured to control, based on a communications signal sent by the communications chip, the communications chip and the communications controller to establish communications.

In some implementations, the communications chip includes a PLC communications chip.

In some implementations, at least two SPI modules are provided in the main control chip, and the SPI module is configured to be communicatively connected one-to-one to the communications chip to receive the communications signal.

In some implementations, a quantity of SPI modules is greater than or equal to a quantity of communications chips.

In some implementations, the charging device further includes a communications harness, the communications harness is connected between the communication controller and the communications controller, and the communications harness is configured to transmit a communication signal between the communication controller and the communications controller.

In some implementations, the communications harness includes a CP signal harness, and the communication signal is a CP signal.

In some implementations, the charging device further includes an anti-interference module, and the anti-interference module is disposed in the communications harness, and is configured to enable the communication signal to be stably transmitted on the communications harness.

In some implementations, the anti-interference module is made of an anti-interference material.

In some implementations, the anti-interference module is configured to perform signal conversion on the communication signal.

In some implementations, the anti-interference module is configured to convert the communication signal between a differential signal and a single-ended signal; and the anti-interference module includes a first conversion unit and a second conversion unit connected to the first conversion unit. The first conversion unit is disposed in a charging pile and connected to the communications controller through the communications harness, and the first conversion unit is configured to convert the communication signal from the single-ended signal to the differential signal. The second conversion unit is disposed in the communication controller, and the second conversion unit is configured to receive the differential signal sent by the first conversion unit, and convert the differential signal into the single-ended signal.

In some implementations, the communication controller is configured to support at least one of ISO15118, GB27930, and ChedeMo protocols.

In some implementations, the charging device includes at least two charging piles and a control unit. The control unit is connected to the at least two charging piles and includes the communication controller and a control module, and the control module is connected to the communication controller, and is configured to control the charging piles to charge the vehicle.

In some implementations, the charging device includes a charging pile. The charging pile includes the communication controller and a control module, and the control module is connected to the communication controller, and is configured to control the charging pile to charge the vehicle.

In some implementations, at least one charging gun is provided on the charging pile, and the communication controller is connected to the charging gun and connected to the communications controller through the charging gun; and the charging gun is connected one-to-one to the vehicle.

In some implementations, at least one charging gun is provided on the charging pile, and the communication controller is connected to the charging gun and connected to the communications controller through the charging gun; and the charging pile is connected to the same vehicle through at least two charging guns.

The charging system in the implementations of this application includes a vehicle and the charging device according to any of the foregoing implementations. The vehicle includes a communications controller, and the charging device is configured to charge the vehicle.

In the charging device and the charging system of the implementations of this application, the communication controller can be connected to at least two communications controllers, and the charging device can charge the vehicle in a case that communications is established between the communication controller and the communications controller. Therefore, compared with a case that the communication controller is communicatively connected one-to-one to the communications controller, this application requires only one communication controller to implement communications connection with the at least two communications controllers. A quantity of communication controllers is relatively small, which can not only reduce a production cost of the charging device, but also reduce a volume of the charging device, thereby helping to implement miniaturization of the charging device.

A part of additional aspects and advantages of this application will be given in the following description, and a part will become apparent from the following description, or will be learned through practice of this application.

### BRIEF DESCRIPTION OF DRAWINGS

The foregoing and/or additional aspects and advantages of this application will become apparent and readily understood from the descriptions of the implementations with reference to the following accompanying drawings.
FIG. 1 is a schematic structural diagram of a charging system according to some implementations of this application;
FIG. 2 is a schematic structural diagram of a charging system according to some other implementations of this application; and
FIG. 3 is a schematic structural diagram of some structures in the charging system shown in FIG. 1.

### Description of reference signs of main elements:

1000. Charging system;
100. Charging device; 300. Vehicle; 310. Communications controller; 330. Third power module;
10. Charging pile; 11. Second power module; 30. Control unit; 31. Communication controller; 311. Communications chip; 313. Main control chip; 3131. SPI module; 33. Control module; 35. First power module; 50. Communications harness; 70. Anti-interference module; 71. First conversion unit; and 73. Second conversion unit.

### DESCRIPTION OF EMBODIMENTS

To make the foregoing objectives, features, and advantages of this application more obvious and understandable, the following describes specific implementations of this application in detail with reference to the accompanying drawings. The following description sets forth many specific details to facilitate full understanding of this application. However, this application may be implemented in many different manners from those described herein. A person skilled in the art may make similar improvements without departing from the intension of this application. Therefore, this application is not limited to specific embodiments disclosed below.

In descriptions of this application, it will be understood that the orientation or positional relationship indicated by the terms "center", "length", "upper", "lower", "front", "back", "vertical", "horizontal", "top", "bottom", "inner", "outer", and the like, is an orientation or positional relationship shown based on the accompanying drawings, and is only for ease of describing this application and simplifying the descriptions, rather than indicating or implying that the apparatus or element indicated must have a specific orientation or be constructed and operated in a specific orientation, and therefore will not be understood as a limitation on this application.

In addition, the terms "first" and "second" are used for a descriptive purpose only and shall not be construed as indicating or implying relative importance or implicitly indicating the quantity of the indicated technical features. Therefore, a feature defined with "first" and "second" may explicitly or implicitly include at least one feature. In the description of this application, "a plurality of" means at least two, for example, two or three, unless otherwise clearly and specifically defined.

In this application, unless otherwise clearly specified and defined, terms such as "mount", "interconnect", and "connect" will be understood in a broad sense, for example, may be a fixed connection, a detachable connection, or an integral connection; may be a mechanical connection or electrical connection; or may be a direct connection, an indirect connection through an intermediate medium, an internal connection between two elements, or an interaction relationship between two elements, unless otherwise clearly defined. A person of ordinary skill in the art may understand specific meanings of the foregoing terms in this application based on specific situations.

In this application, unless otherwise clearly specified and defined, that a first feature is "above" or "below" a second feature may be that the first and second features are in direct contact, or the first and second features are in indirect contact through an intermediate medium. In addition, that the first feature is "above", "over", or "on top of" the second feature may be that the first feature is directly above or obliquely above the second feature, or merely indicates that a level height of the first feature is higher than that of the second feature. That the first feature is "under", "below", or "beneath" the second feature may be that the first feature is directly below or obliquely below the second feature, or merely indicates that a horizontal height of the first feature is less than that of the second feature.

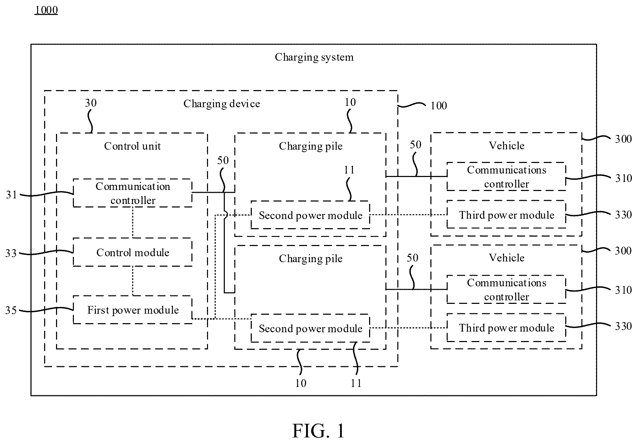

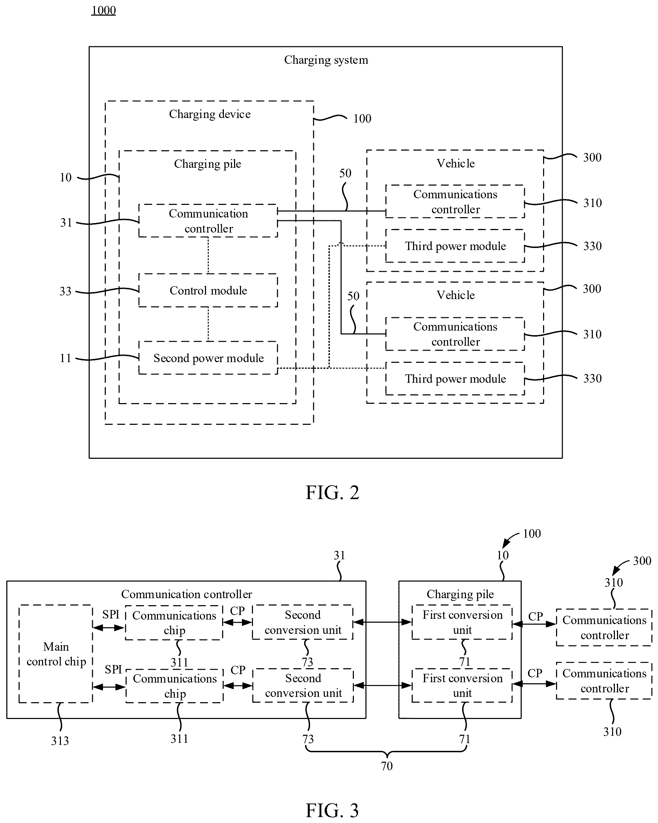

With the rapid development of an electric vehicle industry, direct current charging technology, as one of the core methods of efficient energy replenishment, has received increasing attention from a person skilled in the art. In related technologies, a communication controller (Supply Equipment Communication Controller, SECC) is generally deployed in a charging device, and the communication controller can establish a one-to-one communication connection with a communications controller (Electric Vehicle Communication Controller, EVCC) in a vehicle, so that the charging device can charge the vehicle. However, such an arrangement leads to a relatively large quantity of communication controllers in a scenario of a multi-gun charging pile or charging stack, resulting in a relatively high production cost of the charging device. Referring to FIG. 1 or FIG. 2, to resolve this problem, implementations of this application provide a charging device 100 and a charging system 1000.

Referring to FIG. 1 or FIG. 2, the charging system 1000 in an implementation of this application includes a charging device 100 and a vehicle 300, and the charging device 100 is configured to charge the vehicle 300.

It will be understood that the vehicle 300 is an energy receiving end in the charging system 1000, and the charging device 100 is an energy supply end in the charging system 1000, that is, the charging device 100 is an apparatus that can provide electrical energy for the vehicle 300. For example, in a case that the charging device 100 is connected (including being physically connected and electrically connected) to the vehicle 300, and communications connection is implemented in accordance with a communications protocol, the charging device 100 can obtain a requirement parameter of the vehicle 300 (for example, a maximum/minimum voltage/current, a battery capacity, a charging mode, and a charging target), and charge the vehicle 300 based on a capability parameter (for example, an output power range, an available charging mode, and a power supply type) of the charging device 100.

It will be noted that, in some embodiments, the vehicle 300 includes but is not limited to a passenger vehicle such as a battery electric vehicle or a hybrid vehicle, or a large engineering vehicle whose working condition is not very bad. A method in which the charging device 100 charges the vehicle 300 includes but is not limited to wired charging, wireless charging, battery swapping, and the like. The wired charging can be divided into direct current charging and/or alternating current charging based on a current type.

The charging system 1000 in this implementation includes the charging device 100. It will be understood that the charging system 1000 includes at least the same beneficial effects as the charging device 100. Therefore, for beneficial effects of the charging system 1000, reference can be made to beneficial effects of the charging device 100 described below.

Referring to FIG. 1 or FIG. 2, the charging device 100 in this implementation of this application includes a communication controller 31. The communication controller 31 is configured to be connected (including being physically connected, electrically connected, and the like) to communications controllers 310 of at least two vehicles 300, and the charging device 100 is configured to charge the vehicle 300 in a case that communications is established between the communication controller 31 and the communications controller 310.

It will be understood that the communication controller 31 (Supply Equipment Communication Controller, SECC) is a component in the charging device 100 that is configured to control a charging process and configured to communicate with the vehicle 300. The communication controller 31 has functions such as controlling a voltage, controlling a current, and controlling a charging mode. In some embodiments of this application, the communication controller 31 is configured to support at least one of ISO15118, GB27930, and ChedeMo protocols. That is, in a charging process, the communication controller 31 and the communications controller 310 can communicate with each other in accordance with at least one of the ISO15118 European standard protocol, the GB27930 Chinese standard protocol, or the ChedeMo Japanese standard protocol.

The communications controller 310 (Electric Vehicle Communication Controller, EVCC) is a component in the vehicle 300 that is configured to communicate with the charging device 100. The communication controller 31 can transfer a requirement of the vehicle 300 and control a charging process. In some embodiments of this application, a procedure for establishing communications between the communication controller 31 and the communications controller 310 may be as follows: In a case that the charging device 100 is physically connected to the vehicle 300, for example, in a case that a charging gun of the charging device 100 is connected to the vehicle 300, a channel can be formed between the communication controller 31 and the communications controller 310. In this case, the communication controller 31 and the communications controller 310 can perform handshake communications, and after it is determined that the handshake succeeds, a communications procedure of a charging protocol is started, that is, based on a charging standard, the communication controller 31 and the communications controller 310 can perform data transmission (for example, a requirement parameter of the vehicle 300 and a capability parameter of the charging device 100), and the communication controller 31 can control output of the charging device 100 based on the data to ensure that the charging process conforms to a charging requirement of the vehicle 300.

It will be noted that, in some embodiments, steps of the handshake communications may include: sending, by the communication controller 31, a handshake signal to the communications controller 310; after receiving the handshake signal, verifying, by the communications controller 310, validity of connection and sending back an acknowledgment signal to the communication controller 31; and after determining that the handshake succeeds, starting, by the communication controller 31, a communications procedure of the charging protocol.

In addition, the communication controller 31 can be connected to communications controllers 310 of at least two vehicles 300, that is, when the communication controller 31 is connected to each communications controller 310, the foregoing procedure for establishing communications needs to be performed. Therefore, the communication controller 31 can individually control each communications controller 310. In other words, the communication controller 31 can establish independent and stable communications connection with each communications controller 310, so that communications between the communication controller 31 and the communications controller 310 is more stable and efficient.

In some implementations, the vehicle 300 includes a communications controller 310. Specifically, each vehicle 300 includes at least one communications controller 310. Therefore, a mode in which the charging device 100 charges the vehicle 300 may be a single-gun mode for one vehicle, that is, each vehicle 300 includes one communications controller 310, and one charging gun (that is, a charging gun connected to a charging pile 10 in the following) of the charging device 100 charges the vehicle 300. Alternatively, a mode in which the charging device 100 charges the vehicle 300 may be a dual-gun mode for one vehicle, that is, each vehicle 300 includes two communications controllers 310, and two charging guns of the charging device 100 charge the same vehicle 300. In this way, charging efficiency of the charging device 100 on the vehicle 300 can be improved. Alternatively, a mode in which the charging device 100 charges the vehicle 300 may be a multi-gun mode for one vehicle, that is, each vehicle 300 includes at least two communications controllers 310, and at least two charging guns of the charging device 100 charge the same vehicle 300. In this way, charging efficiency of the charging device 100 on the vehicle 300 can be improved.

In the charging device 100 of the implementations of this application, the communication controller 31 can be connected to at least two communications controllers 310, and the charging device 100 can charge the vehicle 300 in a case that communications is established between the communication controller 31 and the communications controller 310. Therefore, compared with a case that the communication controller 31 is communicatively connected one-to-one to the communications controller 310, this application requires only one communication controller 31 to implement communications connection with the at least two communications controllers 310. A quantity of communication controllers 31 is relatively small, which can not only reduce a production cost of the charging device 100, but also reduce a volume of the charging device 100, thereby helping to implement miniaturization of the charging device 100.

The following further describes the charging device 100 with reference to the accompanying drawings.

Referring to FIG. 1, in some implementations, the charging device 100 includes at least two charging piles 10 and a control unit 30. The control unit 30 is connected to the at least two charging piles 10 and includes the communication controller 31 and a control module 33, and the control module 33 is connected to the communication controller 31, and is configured to control the charging piles 10 to charge the vehicle 300. It will be understood that, in this implementation, the charging device 100 may be a charging stack.

Specifically, in some embodiments, the charging device 100 further includes a first power module 35, and the first power module 35 is connected to the control module 33; the charging pile 10 further includes a second power module 11; and the vehicle 300 further includes a third power module 330. In a case that the charging pile 10 is connected to the vehicle 300 and communications is established between the communication controller 31 and the communications controller 310, the control module 33 can control, based on the communications between the communication controller 31 and the communications controller 310, the first power module 35 to supply power to the second power module 11, and supply power to the third power module 330 through the second power module 11, thereby implementing a charging function of the charging pile 10 to the vehicle 300.

It will be noted that, in some embodiments, an information transmission method between the control module 33 and the first power module 35 may be in various forms, and may be in a form of a communications signal of CAN, SPI, or SCI, or may be in a form of a control signal of PWM or IO. The control module 33 may be a central process unit (CPU), a microcontroller unit (MCU), or the like, which is not limited in this application.

Referring to FIG. 2, in some other implementations, the charging device 100 includes a charging pile 10. The charging pile 10 includes the communication controller 31 and a control module 33, and the control module 33 is connected to the communication controller 31, and is configured to control the charging pile 10 to charge the vehicle 300. It will be understood that, in this implementation, the charging device 100 may be a charging pile 10.

Specifically, in some embodiments, the charging pile 10 further includes a second power module 11, and the second power module 11 is connected to the control module 33; and the vehicle 300 further includes a third power module 330. In a case that the charging pile 10 is connected to the vehicle 300 and communications is established between the communication controller 31 and the communications controller 310, the control module 33 can control, based on the communications between the communication controller 31 and the communications controller 310, the second power module 11 to supply power to the third power module 330, so that the charging pile 10 charges the vehicle 300.

It will be noted that, in some embodiments, an information transmission method between the control module 33 and the second power module 11 may be in various forms, and may be in a form of a communications signal of CAN, SPI, or SCI, or may be in a form of a control signal of PWM or IO. The control module 33 may be a central process unit (CPU), a microcontroller unit (MCU), or the like, which is not limited in this application.

For ease of understanding, the following implementations are described by using an example in which the charging device 100 is a charging stack. It will be understood that because both the communication controller 31 and the control module 33 are arranged in the control unit 30, the charging pile 10 is smaller in volume compared with a case that the communication controller 31 and/or the control module 33 are arranged in the charging pile 10, which helps to implement miniaturization of the charging pile 10.

In some implementations, at least one charging gun is provided on the charging pile 10, and the communication controller 31 is connected to the charging gun and connected to the communications controller 310 through the charging gun.

Specifically, in some embodiments, the charging gun is connected one-to-one to the vehicle 300. That is, a mode in which the charging device 100 charges the vehicle 300 may be a single-gun mode for one vehicle. In some other embodiments, the charging pile 10 is connected to the same vehicle 300 through at least two charging guns. That is, a mode in which the charging device 100 charges the vehicle 300 may be a dual-gun mode for one vehicle or a multi-gun mode for one vehicle.

Referring to FIG. 1, in some implementations, the charging device 100 further includes a communications harness 50, the communications harness 50 is connected between the communication controller 31 and the communications controller 310, and the communications harness 50 is configured to transmit a communication signal between the communication controller 31 and the communications controller 310. In some embodiments of this application, the communications harness 50 conforms to a requirement of a European standard charging standard specified in IEC 62193-2 for a communications harness.

Arrangement of the communications harness 50 can improve stability of transmission of the communication signal between the communication controller 31 and the communications controller 310, and ensure normal establishment of communications between the communication controller 31 and the communications controller 310, so that a charging function of the charging device 100 to the vehicle 300 can be normally implemented. It will be noted that, in some embodiments, the communications harness 50 includes a CP signal harness, and the communication signal is a CP signal; and a quantity of communications harnesses 50 may be the same as a quantity of charging guns of the charging device 100.

It will be understood that, because the communication signal passes through an electromagnetic interference region in a process of transmitting the communication signal on the communications harness 50, for example, the communication signal passes through regions in which the first power module 35 and the second power module 11 are located in a process of transmitting the communication signal, the communication signal is subject to significant electromagnetic interference, which causes abnormality of data packet transmission and reduces stability of communications between the communication controller 31 and the communications controller 310.

However, in some implementations of this application, the charging device 100 further includes an anti-interference module 70, and the anti-interference module 70 is disposed in the communications harness 50, and is configured to enable the communication signal to be stably transmitted on the communications harness 50. Therefore, arrangement of the anti-interference module 70 can improve anti-interference capability of the communication signal, reduce impacts of electromagnetic interference on the communication signal when the communication signal passes through the electromagnetic interference region, prevent abnormality of data packet transmission, for example, prevent data loss, and improve stability and reliability of communications between the communication controller 31 and the communications controller 310.

In some implementations, the anti-interference module 70 is made of an anti-interference material. It will be noted that, in some embodiments, the anti-interference material may be aluminum, tin-plated copper, nickel-zinc ferrite, a conductive coating including silver, copper, or graphene, or the like, which is not limited in this application. For example, the anti-interference module 70 may be made of aluminum foil, and the aluminum foil wraps the communications harness 50, so as to implement shielding protection for the communication signal in the communications harness 50.

In some other implementations, the anti-interference module 70 is configured to perform signal conversion on the communication signal, so as to improve anti-interference capability of the communication signal in a transmission process.

For example, that the anti-interference module 70 performs signal conversion on the communication signal may include but is not limited to the following cases: The anti-interference module 70 converts the communication signal between a differential signal and a single-ended signal, the anti-interference module 70 converts the communication signal between an optical fiber signal and a single-ended signal, and the anti-interference module 70 converts the communication signal between a wireless signal and a single-ended signal.

For ease of understanding, the following implementations are described by using an example in which the anti-interference module 70 is configured to convert the communication signal between the differential signal and the single-ended signal.

It will be noted that the single-ended signal transmits an electrical signal through a single wire, with a common ground wire as a basis of reference; and a magnitude of a signal level is represented by an absolute value of a wire-to-ground voltage. The differential signal is transmitted through a pair of wires with opposite phases and equal amplitudes (a positive terminal P and a negative terminal N), and a receiving end parses information by using a voltage difference between the two wires. Because common-mode noise (for example, electromagnetic interference) acts on two wires of the differential signal simultaneously, the common-mode noise is completely canceled out, and only an original signal difference is reserved. In this way, anti-interference capability of the differential signal is relatively strong.

Furthermore, with reference to FIG. 3, in some embodiments, the anti-interference module 70 is configured to convert the communication signal between the differential signal and the single-ended signal. The anti-interference module 70 includes a first conversion unit 71 and a second conversion unit 73 connected to the first conversion unit 71. The first conversion unit 71 is disposed in the charging pile 10 and connected to the communications controller 310 through the communications harness 50, and the first conversion unit 71 is configured to convert the communication signal from the single-ended signal to the differential signal. The second conversion unit 73 is disposed in the communication controller 31, and the second conversion unit 73 is configured to receive the differential signal sent by the first conversion unit 71, and convert the differential signal into the single-ended signal.

Specifically, in some embodiments, in a case that the communications harness 50 transmits the communication signal to the first conversion unit 71, the first conversion unit 71 can convert the communication signal from the single-ended signal into the differential signal, and transmits the differential signal to the second conversion unit 73. After receiving the differential signal, the second conversion unit 73 can convert the differential signal into the single-ended signal, so that the communication controller 31 obtains the communication signal sent by the communications controller 310. Therefore, the communication signal is mainly transmitted between the communication controller 31 and the communications controller 310 in a form of the differential signal, thereby reducing an impact of electromagnetic interference of the communication signal on the communication signal, preventing abnormality of data packet transmission, and improving stability and reliability of communications between the communication controller 31 and the communications controller 310.

Referring to FIG. 1 and FIG. 3, in some implementations, the communication controller 31 includes at least two communications chips 311 and a main control chip 313. The at least two communications chips 311 are connected one-to-one to the at least two communications controllers 310; and the main control chip 313 is connected to the at least two communications chips 311, and the main control chip 313 is configured to control, based on a communications signal sent by the communications chip 311, the communications chip 311 and the communications controller 310 to establish communications. It will be noted that, in some embodiments, the communications chip 311 includes a PLC communications chip.

Specifically, in some embodiments, the communications chip 311 can be connected to the communications controller 310 through the communications harness 50, and in a case that the communications chip 311 receives the communication signal, the communications chip 311 can parse the communication signal to generate a communications signal, and send the communications signal to the main control chip 313, so that the main control chip 313 controls, based on the communications signal, the communications chip 311 and the communications controller 310 to establish communications. For example, the communications signal can parse a communication signal (a CP signal) that conforms to the ISO15118 into a communications signal (a digital signal), and transfer the communications signal to the main control chip 313. It will be understood that, in some embodiments, in a case that the anti-interference module 70 includes the first conversion unit 71 and the second conversion unit 73, the communications chip 311 is connected to the second conversion unit 73.

Furthermore, in some implementations, at least two SPI modules are provided in the main control chip 313, and the SPI module is configured to be communicatively connected one-to-one to the communications chip 311 to receive the communications signal, the communications signal including an SPI signal.

Specifically, in some embodiments, in a case that the communications chip 311 parses the communication signal into the communications signal, the communications chip 311 can transmit the communications signal to the main control chip 313 through an SPI communications protocol. It will be noted that, in some embodiments, software running in the main control chip 313 supports multiple processes. In a case that a channel is formed between the communication controller 31 and the communications controller 310 through the communications harness 50, the communications controller 310 is in communication with one communications chip 311 in the communication controller 31. In this case, a software process in the main control chip 313 receives handshake communications from the communications controller 310, and the software process controls a corresponding communications chip 311 to transmit a signal to the communications controller 310, and implements communications of a charging protocol based on a charging standard.

In addition, the main control chip 313 supports multiple processes, and each process can be independent of each other to control a corresponding SPI module, that is, each process controls an independent SPI module and a communications chip 311. Therefore, the communication controller 31 can communicate with at least two communications controllers 310, and communications links between the communication controller 31 and the at least two communications controllers 310 are independent of each other, and no case of mutual interference and resource preemption exists. This enables communications between the communication controller 31 and the communications controller 310 to be more stable and efficient.

In addition, when a plurality of vehicles 300 are connected to the charging device 100, disconnection or functional failure of any vehicle 300 does not affect normal communications between the communications controller 310 of another vehicle 300 and the communication controller 31, thereby ensuring stability of charging the vehicle 300 by the charging device 100.

In conclusion, the communication controller 31 in the implementations of this application includes at least two communications chips 311 and a main control chip 313. In addition, the communications chip 311 implements only a physical layer and a link layer, and other communications layers need to be implemented by the main control chip 313. In addition, the main control chip 313 can create a plurality of port numbers and assign the port numbers to different processes, so that one communication controller 31 simultaneously serves at least two communications controllers 310.

In some implementations, a quantity of SPI modules is greater than or equal to a quantity of communications chips 311. Specifically, in some embodiments, the quantity of SPI modules and the quantity of communications chips 311 may be in a one-to-one correspondence, that is, one SPI module corresponds to one communications chip 311. In some other embodiments, the quantity of SPI modules is greater than the quantity of communications chips 311, which facilitates addition of the communications chip 311, thereby increasing a quantity of communications controllers 310 that can be connected to the communication controller 31.

The technical features in the foregoing embodiments may be combined in any manner. To make the description brief, not all possible combinations of the technical features in the foregoing embodiments are described. However, as long as there is no contradiction between combinations of the technical features, all the combinations of the technical features will be considered to be within the scope of this specification. In addition, other implementations may be derived from the foregoing embodiments, so that structural and logical replacements and changes can be made without departing from the scope of this disclosure.

The foregoing embodiments express only several implementations of this application, and descriptions thereof are relatively specific and detailed, but will not be construed as limiting the scope of the patent. It will be noted that a person of ordinary skill in the art may also make some modifications and improvements without departing from the conception of this application, and these modifications and improvements all fall within the protection scope of this application. Therefore, the protection scope of this application shall be subject to the appended claims.

## Claims

1. A charging device (100), comprising:
a communication controller (31) configured to be connected to communications controllers (310) of at least two vehicles (300), the charging device (100) being configured to charge the vehicle (300) in a case that communications is established between the communication controller (31) and the communications controller (310).

2. The charging device (100) according to claim 1, wherein the communication controller (31) comprises:
at least two communications chips (311) connected one-to-one to the at least two communications controllers (310); and
a main control chip (313) connected to the at least two communications chips (311), the main control chip (313) being configured to control, based on a communications signal sent by the communications chip (311), the communications chip (311) and the communications controller (310) to establish communications.

3. The charging device (100) according to claim 2, wherein the communications chip (311) comprises a PLC communications chip.

4. The charging device (100) according to claim 2, wherein at least two SPI modules are provided in the main control chip (313), and the SPI module is configured to be communicatively connected one-to-one to the communications chip (311) to receive the communications signal.

5. The charging device (100) according to claim 4, wherein a quantity of SPI modules is greater than or equal to a quantity of communications chips (311).

6. The charging device (100) according to claim 1, wherein the charging device (100) further comprises:
a communications harness (50), the communications harness (50) being connected between the communication controller (31) and the communications controller (310), and the communications harness (50) being configured to transmit a communication signal between the communication controller (31) and the communications controller (310).

7. The charging device (100) according to claim 6, wherein the communications harness (50) comprises a CP signal harness, and the communication signal is a CP signal.

8. The charging device (100) according to claim 6, wherein the charging device (100) further comprises:
an anti-interference module (70), the anti-interference module (70) being disposed in the communications harness (50), and being configured to enable the communication signal to be stably transmitted on the communications harness (50).

9. The charging device (100) according to claim 8, wherein
the anti-interference module (70) is made of an anti-interference material; or
the anti-interference module (70) is configured to perform signal conversion on the communication signal.

10. The charging device (100) according to claim 8, wherein the anti-interference module (70) is configured to convert the communication signal between a differential signal and a single-ended signal; and the anti-interference module (70) comprises:
a first conversion unit (71) disposed in a charging pile (10) and connected to the communications controller (310) through the communications harness (50), the first conversion unit (71) being configured to convert the communication signal from the single-ended signal to the differential signal; and
a second conversion unit (73) connected to the first conversion unit (71) and disposed in the communication controller (31), the second conversion unit (73) being configured to receive the differential signal sent by the first conversion unit (71), and convert the differential signal into the single-ended signal.

11. The charging device (100) according to claim 1, wherein the communication controller (31) is configured to support at least one of ISO15118, GB27930, and ChedeMo protocols.

12. The charging device (100) according to claim 1, wherein the charging device (100) further comprises:
at least two charging piles (10); and
a control unit (30) connected to the at least two charging piles (10) and comprising the communication controller (31) and a control module (33), the control module (33) being connected to the communication controller (31), and being configured to control the charging piles (10) to charge the vehicle (300).

13. The charging device (100) according to claim 1, wherein the charging device (100) further comprises:
a charging pile (10) comprising the communication controller (31) and a control module (33), the control module (33) being connected to the communication controller (31), and being configured to control the charging pile (10) to charge the vehicle (300).

14. The charging device (100) according to claim 12 or 13, wherein at least one charging gun is provided on the charging pile (10), and the communication controller (31) is connected to the charging gun and connected to the communications controller (310) through the charging gun; and
the charging gun is connected one-to-one to the vehicle (300); or
the charging pile (10) is connected to a same vehicle (300) through at least two charging guns.

15. A charging system (1000), comprising:
a vehicle (300), the vehicle (300) comprising a communications controller (310); and
the charging device (100) according to any one of claims 1 to 14, the charging device (100) being configured to charge the vehicle (300).
